# EUROPÄISCHE PATENTSCHRIFT

(11) **EP 3 678 888 B1**
(45) Veröffentlichungstag und Bekanntmachung des Hinweises auf die Patenterteilung: **04.11.2020**
(21) Anmeldenummer: 19721262.4
(22) Anmeldetag: 30.04.2019
(51) Int. Cl.: B60K 37/06, G06Q 30/00

(54) **PROBEFAHRTMODUS FÜR EIN FAHRZEUG**
TEST DRIVE MODE FOR A VEHICLE
MODE ESSAI DE BON FONCTIONNEMENT D'UN VÉHICULE

(30) Priorität: 14.05.2018 DE 102018207381
(43) Veröffentlichungstag der Anmeldung: 15.07.2020
(73) Patentinhaber: Audi AG, 85045 Ingolstadt (DE)
(72) Erfinder: HASELBECK, Florian, 94405 Landau (DE)
(86) Internationale Anmeldenummer: PCT/EP2019/061006
(87) Internationale Veröffentlichungsnummer: WO 2019/219370

(56) Entgegenhaltungen:
- DE-A1-102016 116 274
- US-A1- 2009 069 972
- US-A1- 2016 371 759
- US-B1- 9 697 503

## Beschreibung

Die Erfindung betrifft eine Multimediavorrichtung für ein Fahrzeug mit einer während einer Probefahrt des Fahrzeugs ausführbaren Probefahrtapplikation, welche konfiguriert ist, während der Probefahrt des Fahrzeugs mit einem Probefahrer zu interagieren und mindestens ein Funktionssystem des Fahrzeugs testweise zu aktivieren.

Moderne Fahrzeuge umfassen in der Regel eine Multimediavorrichtung (Multimedia Interface, MMI) und eine Vielzahl von teilweise komplexen Funktionssystemen, welche als Fahrassistenzsysteme oder als Komfortsysteme ausgestaltet sein können und von einem Steuergerät (Electronic Control Unit, ECU) des Fahrzeugs über ein Bussystem gesteuert werden.

Ein Fahrer eines solchen Fahrzeugs kann aufgrund der Komplexität und der Vielzahl der in dem Fahrzeug verbauten Funktionssysteme mit der Betätigung des Fahrzeugs, d.h. mit der Bedienung der Funktionssysteme, überfordert sein und ein Funktionssystem falsch bedienen oder eine Aktivierung eines Funktionssystems trotz einer vorteilhaften Wirkung unterlassen.

Zur Linderung dieses Nachteils offenbart die DE 10 2006 049 965 A1 eine Vorrichtung und ein Verfahren zum interaktiven Anleiten eines Fahrers eines Fahrzeugs. Bei dem Verfahren werden dem Fahrer abhängig von einer Fahr- und/oder einer Fahrersituation, welche fortlaufend durch Auswerten erfasster Statusdaten ermittelt wird, in Echtzeit passende Informationen und/oder Hilfestellungen auf einer Multimediavorrichtung angezeigt.

Einen Schritt weiter geht die DE 10 2016 116 274 A1, die ein Verfahren zum angeleiteten Ausprobieren eines Fahrassistenzsystems eines Fahrzeugs offenbart. Bei dem Verfahren wählt ein Fahrer mittels einer Multimediavorrichtung ein auszuprobierendes Fahrassistenzsystem aus. Eine Anleitungsapplikation simuliert die Wirkung des gewählten Fahrassistenzsystems und kann ein zu der Wirkung korrespondierendes erwartetes Verhalten des Fahrers anleiten. Während der Simulation vergleicht die Anleitungsapplikation ein tatsächliches Verhalten des Fahrers mit dem erwarteten Verhalten und gibt dem Fahrer aufgrund des Vergleichs eine Rückmeldung.

Die vorstehend beschriebenen Lösungen betreffen allerdings eine Verwendung des Fahrzeugs nach einem Kauf des Fahrzeugs. Vor dem Kauf eines Fahrzeugs liegt dagegen eine grundsätzlich andere Situation vor, welche entsprechend anders gelagerte Fragestellungen mit sich bringt.

Einem potentiellen Käufer eines Fahrzeugs sind nämlich Funktions- und Wirkungsweisen vieler vor allem neuartiger Funktionssysteme eines Fahrzeugs häufig unbekannt. Oder der Käufer kennt sie lediglich abstrakt und hat ihren Effekt noch nicht bewusst erfahren. Überdies können die dem Käufer abstrakt bekannten Informationen auch falsch oder zumindest ungenau sein, da er sie nicht aus erster Hand, sondern von Freunden, Kollegen oder sogar bekannten Mitarbeitern eines Herstellers des Fahrzeugs erhalten hat, welche im Allgemeinen auch nicht jedes Funktionssystem jeder Fahrzeugbaureihe im Detail kennen.

Da zumindest einige der Funktionssysteme als eine Sonderausstattung des Fahrzeugs vorgesehen sein können, welche beim Kauf des Fahrzeugs einen erhöhten Kaufpreis und damit einen erhöhten Umsatz und Gewinn des Herstellers nach sich ziehen, besteht seitens des Herstellers ein starkes Interesse, einem potentiellen Käufer vor einem Kauf des Fahrzeugs möglichst viele verfügbare Funktionssysteme des Fahrzeugs bekannt und schmackhaft zu machen.

Zwar erhält ein potentieller Käufer von einem Fahrzeughändler vor dem Kauf eines Fahrzeugs zumeist die Gelegenheit, mit dem Fahrzeug seines Interesses eine Probefahrt zu absolvieren. Jedoch besteht die Gefahr, dass der Probefahrer während der Probefahrt von vielen neuen Eindrücken abgelenkt ist und es versäumt, die häufig kaum überschaubare Vielzahl von Funktionssystemen adäquat und bewusst auszuprobieren.

Dem entgegenwirkend offenbart die DE 10 2014 013 409 A1 ein Verfahren zum Demonstrieren mindestens eines Fahrassistenzsystems eines Fahrzeugs. Zum Durchführen des Verfahrens wird das Fahrzeug in einen Demonstrationsmodus versetzt. Während einer Demonstrationsfahrt werden einem Fahrer des Fahrzeugs anhand einer vorbestimmten Liste ein oder mehrere in dem Fahrzeug verbaute Fahrassistenzsysteme zum Ausprobieren vorgeschlagen, wobei auch ein mehrmaliges Ausprobieren eines Fahrassistenzsystems möglich ist. In dem Demonstrationsmodus wird gespeichert und auf einer Multimediavorrichtung angezeigt, welche Fahrassistenzsysteme bereits ausprobiert und welche Fahrassistenzsysteme für ein Ausprobieren noch zur Verfügung stehen.

Zwar lässt sich das beschriebene Verfahren während einer Probefahrt durchführen und kann auch dazu beitragen, dass der Probefahrer sämtliche oder zumindest möglichst viele Fahrassistenzsysteme tatsächlich ausprobiert. Jedoch bietet es dem Probefahrer darüber hinaus wenig Unterstützung. Ebenso wenig erhält der Fahrzeughändler eine Unterstützung für ein üblicherweise nach der Probefahrt zu führendes Verkaufsgespräch mit dem Probefahrer.

Der Gegenstand des Anspruchs 1 unterscheidet sich von der weitere bekannten Vorrichtung der US 2016/371759 A1 dadurch, dass die Probefahrtapplikation weiter konfiguriert ist, während der Probefahrt des Fahrzeugs mindestens ein Funklionssystem des Fahrzeugs testweise zu aktivieren, und dass zu jedem testweise aktivierten Funktionssystem eine Rückmeldung des Probefahrers abgefragt wird.

Der Erfindung liegt daher die Aufgabe zugrunde, eine verbesserte Multimediavorrichtung zu schaffen, welche die beschriebenen Nachteile vermeidet und ein effizienteres Verkaufsgespräch nach einer Probefahrt ermöglicht. Darüber hinaus ist es Aufgabe der Erfindung, ein Verfahren zum Betreiben einer solchen Multimediavorrichtung vorzuschlagen.

Ein Gegenstand der vorliegenden Erfindung ist eine Multimediavorrichtung für ein Fahrzeug mit einer während einer Probefahrt des Fahrzeugs ausführbaren Probefahrtapplikation, welche konfiguriert ist, während der Probefahrt des Fahrzeugs mit einem Probefahrer zu interagieren und mindestens ein Funktionssystem des Fahrzeugs testweise zu aktivieren. Die Multimediavorrichtung, mindestens ein Funktionssystem und mindestens ein den Funktionsgeräten zugeordnetes Steuergerät sind an ein Bussystem des Fahrzeugs angeschlossen. Durch Installieren der Probefahrtapplikation wird die Multimediavorrichtung zusätzlich in die Lage versetzt, während der Probefahrt ein Steuergerät zu veranlassen, das dem Steuergerät zugeordnete Funktionssystem zum Testen, d. h. Ausprobieren, durch den Probefahrer zu aktivieren. Mittels der Probefahrtapplikation kann ein Funktionsumfang einer vorhandenen Multimediavorrichtung nachträglich auf einfache Weise erweitert werden.

Die erfindungsgemäße Multimediavorrichtung ist konfiguriert, zu jedem testweise aktivierten Funktionssystem eine Rückmeldung des Probefahrers abzufragen. Dadurch erhält der Probefahrer die Möglichkeit, gegenüber der Multimediavorrichtung eine Beurteilung des Funktionssystems abzugeben. Die Rückmeldung des Probefahrers kann kurz, d. h. knapp, sein und ein Interesse an dem Funktionssystem, eine Indifferenz bzgl. des Funktionssystems oder ein Desinteresse an dem Funktionssystem bekunden. Aber auch eine differenzierte Rückmeldung kann von der Probefahrtapplikation abgefragt werden, beispielsweise eine Bewertung nach einem Punkte- oder Notensystem.

In einer bevorzugten Ausführungsform ist die Probefahrtapplikation konfiguriert, mittels einer Vorrichtung des Fahrzeugs zur drahtlosen Kommunikation die abgefragte Rückmeldung des Probefahrers an ein stationäres Backendsystem zu übermitteln. Auf diese Weise sind Rückmeldungen des Probefahrers bereits während der Probefahrt auf dem Backendsystem verfügbar. Das Backendsystem kann von einem Hersteller des Fahrzeugs oder einem Fahrzeughändler bereitgestellt sein. Der Fahrzeughändler kann mittels eines Zugreifens auf das Backendsystem entsprechend Kenntnis von den Rückmeldungen des Probefahrers erlangen, bevor dieser von der Probefahrt zurückkehrt.

In weiteren Ausführungsformen ist die Probefahrtapplikation konfiguriert, ausschließlich von einem Fahrzeughändler gestartet zu werden. Anders gesagt handelt es sich bei der Probefahrtapplikation um eine ausschließlich für Probefahrten vorgesehene Applikation, welche im normalen Fahrbetrieb des Fahrzeugs nicht ausführbar ist. Der Fahrzeughändler kann eine spezielle Autorisierung benötigen, um die Probefahrtapplikation zum Ausführen während einer Probefahrt freizuschalten.

Vorteilhaft umfasst die Multimediavorrichtung ferner ein insbesondere mindestens ein Videotutorial umfassendes digitales Benutzerhandbuch und weist die Probefahrtapplikation eine Schnittstelle zu dem digitalen Benutzerhandbuch auf und ist insbesondere konfiguriert, das mindestens eine Videotutorial abzuspielen. Bei dieser Konfiguration kann die Probefahrtapplikation Inhalte einbinden, die in der Multimediavorrichtung bereits gespeichert sind. Damit lassen sich der Umfang und die Komplexität der Probefahrtapplikation deutlich verringern.

Gegenstand der Erfindung ist auch ein Verfahren zum Interagieren mit einem Probefahrer während einer Probefahrt eines Fahrzeugs, bei dem von einer Multimediavorrichtung des Fahrzeugs, insbesondere einer erfindungsgemäßen Multimediavorrichtung mit einer Probefahrtapplikation, die folgenden Schritte ausgeführt werden:
- Begrüßen des Probefahrers,
- Vorstellen mindestens eines Funktionssystems des Fahrzeugs,
- Vorschlagen einer testweisen Aktivierung des Funktionssystems,
- Aktivieren des Funktionssystems.
Zur Begrüßung des Probefahrers kann beispielsweise eine Videobotschaft abgespielt werden, in welcher der Probefahrer von einem Vorstand des Herstellers des Fahrzeugs oder von dem Fahrzeughändler persönlich angesprochen wird und eine Einführung in den Ablauf der Probefahrt erhält. Während der Probefahrt werden nacheinander verschiedene Funktionssysteme des Fahrzeugs vorgestellt, zur testweisen Aktivierung vorgeschlagen und nach Zustimmung des Probefahrers aktiviert. Auf diese Weise erhält der Probefahrer Informationen zu den in dem Fahrzeug verbauten Funktionssystemen und kann ihre Wirkungsweise verstehen und unmittelbar erfahren.

Bei dem erfindungsgemäßen Verfahren erfolgt ein Abfragen einer Rückmeldung des Probefahrers betreffend das testweise aktivierte Funktionssystem. Nach dem Ausprobieren des Funktionssystems erhält der Probefahrer Gelegenheit, das getestete Funktionssystem zu beurteilen. Dazu fragt die Probefahrtapplikation von dem Probefahrer ab, ob er an dem Funktionssystem interessiert ist, gegenüber dem Funktionssystem indifferent ist oder an dem Funktionssystem nicht interessiert ist. Es können aber auch differenzierte Bewertungen, beispielsweise anhand eines Punkte- oder Notensystems, von dem Probefahrer abgefragt werden.

In einer bevorzugten Ausführungsform des Verfahrens wird die abgefragte Rückmeldung des Probefahrers mittels einer Vorrichtung des Fahrzeugs zur drahtlosen Kommunikation an ein stationäres Backendsystem übermittelt. In dem Backendsystem stehen folglich bereits vor dem Ende der Probefahrt die Rückmeldungen des Probefahrers zu den testweise aktivierten Funktionssystemen zur Verfügung. Entsprechend kann sich der Fahrzeughändler, welcher Zugriff auf das Backendsystem hat, auf ein sich an die Probefahrt anschließendes Verkaufsgespräch mit dem Probefahrer gezielt vorbereiten.

In weiteren Ausführungsformen wird während des Vorstellens eine Bedienungsweise und/oder eine Funktionsweise des Funktionssystems erläutert, insbesondere durch Abspielen eines Videotutorials eines digitalen Benutzerhandbuchs. Vor einem Ausprobieren erhält der Probefahrer relevante Informationen über das vorgestellte Funktionssystem, so dass er bei dem Ausprobieren die Wirkung des Funktionssystems bewusst wahrnehmen und erfahren kann.

Vorteilhaft wird ein Funktionssystem einer Sonderausstattung vorgestellt, vorgeschlagen, und/oder testweise aktiviert. Dadurch erhält der Probefahrer eine Grundlage, auf der er über den Erwerb einer mit zusätzlichen Kosten verbundenen Sonderausstattung entscheiden kann.

In bevorzugten Ausführungsformen wird das Funktionssystem abhängig von einer Fahrsituation des Fahrzeugs vorgestellt, vorgeschlagen und/oder testweise aktiviert. Mittels einer in dem Fahrzeug vorgesehenen Sensorik kann während der Probefahrt fortlaufend die Fahrsituation des Fahrzeugs erfasst werden. In einer bestimmten Fahrsituation kann dann ein zu der Fahrsituation passendes Funktionssystem ausprobiert werden. Mit anderen Worten wird gewährleistet, dass der Probefahrer jedes Funktionssystem in seinem bestimmungsgemäßen Kontext erfährt.

In weiteren Ausführungsformen des Verfahrens wird die Probefahrtapplikation vor dem Start der Probefahrt von einem Fahrzeughändler gestartet. Die Probefahrtapplikation soll nur während einer Probefahrt, d. h. vor dem Kauf des Fahrzeugs, ausgeführt werden und muss infolgedessen von dem Fahrzeughändler freigeschaltet und gestartet werden.

Die Erfindung ist anhand einer Ausführungsform in der Zeichnung schematisch dargestellt und wird unter Bezugnahme auf die Zeichnung weiter beschrieben. Es zeigt:
- Figur 1: in einer schematischen Darstellung eine Ausführungsform einer erfindungsgemäßen Multimediavorrichtung,
- Figur 2: in einem Ablaufdiagramm eine Ausführungsform des erfindungsgemäßen Verfahrens.

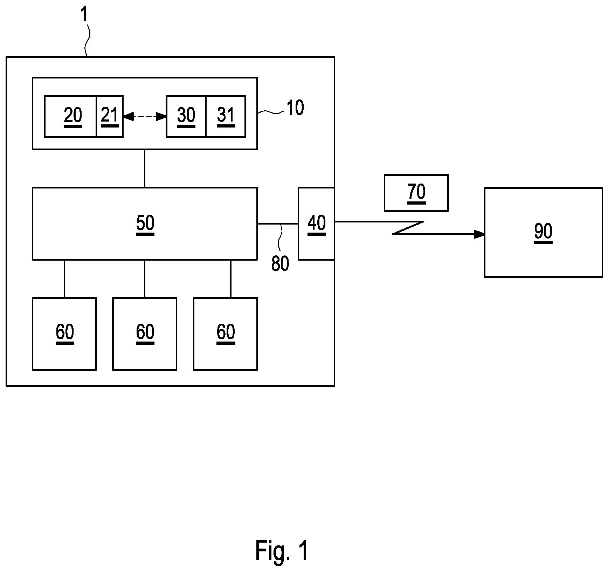

Figur 1 zeigt in einer schematischen Darstellung eine Ausführungsform einer erfindungsgemäßen Multimediavorrichtung 10 (Multimedia Interface, MMI), die in einem Fahrzeug 1 verbaut ist. Ferner umfasst das Fahrzeug 1 ein Steuergerät 50 (Electronic Control Unit, ECU), eine Mehrzahl von Funktionssystemen 60, eine Vorrichtung 40 zur drahtlosen Kommunikation und ein Bussystem 80, an das die Multimediavorrichtung 10, das Steuergerät 50, die Funktionssysteme 60 und die Vorrichtung 40 zur drahtlosen Kommunikation angeschlossen sind.

Die Multimediavorrichtung 10 umfasst ein digitales Benutzerhandbuch 30 mit einer Mehrzahl von Videotutorials 31, welche die Funktionssysteme 60 betreffen, und eine während einer Probefahrt des Fahrzeugs 1 ausführbare Probefahrtapplikation 20, welche eine Schnittstelle 21 zu dem digitalen Benutzerhandbuch 30 aufweist und konfiguriert ist, Videotutorials 31 abzuspielen und während der Probefahrt des Fahrzeugs 1 mit einem Probefahrer zu interagieren.

Die Probefahrtapplikation 20 ist ferner konfiguriert, ausschließlich von einem Fahrzeughändler gestartet zu werden, mindestens ein Funktionssystem 60 des Fahrzeugs 1 testweise zu aktivieren, zu jedem testweise aktivierten Funktionssystem 60 eine Rückmeldung 70 des Probefahrers abzufragen und mittels der Vorrichtung 40 zur drahtlosen Kommunikation die abgefragte Rückmeldung 70 des Probefahrers an ein stationäres Backendsystem 90 zu übermitteln. Das Backendsystem 90 kann von einem Hersteller des Fahrzeugs oder von einem Fahrzeughändler bereitgestellt sein. Jedenfalls kann der Fahrzeughändler auf das Backendsystem 90 zugreifen.

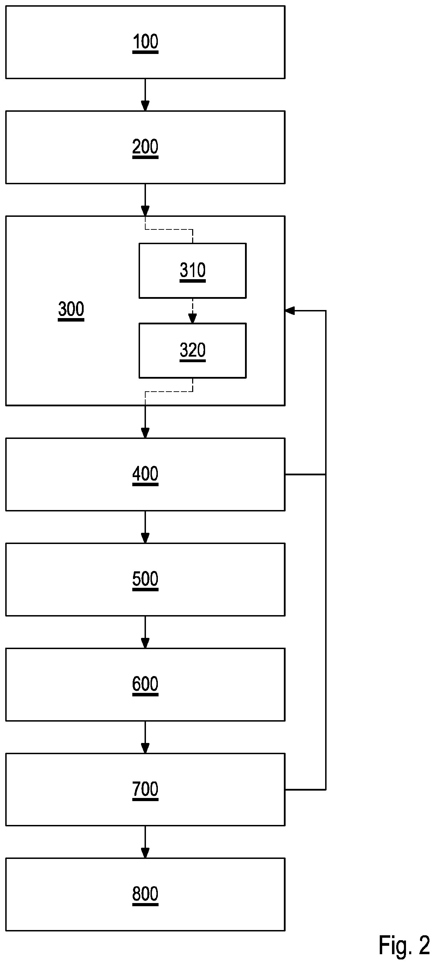

Figur 2 zeigt in einem Ablaufdiagramm eine Ausführungsform des erfindungsgemäßen Verfahrens zum Interagieren mit einem Probefahrer während einer Probefahrt eines Fahrzeugs 1. Vor dem Start der Probefahrt wird die in der Multimediavorrichtung 10 installierte Probefahrtapplikation 20 von einem Fahrzeughändler gestartet 100. Während der Probefahrt führt die Probefahrtapplikation 20 die folgenden Schritte aus:
Zunächst wird der Probefahrer von der Multimediavorrichtung 10 begrüßt 200. Das Begrüßen erfolgt durch Abspielen eines in der Multimediavorrichtung 10 gespeicherten Videos, welches beispielsweise eine einführende Ansprache eines Vorstands des Herstellers des Fahrzeugs 1 oder des Fahrzeughändlers zeigt. Alternativ kann die Probefahrtapplikation 20 den Probefahrer auch auf andere Weise, beispielsweise durch Anzeigen eines Begrüßungstexts, begrüßen 200.

Dann wird ein Funktionssystem 60 des Fahrzeugs 1 vorgestellt 300, indem eine Bedienungsweise und Funktionsweise des Funktionssystems 60 erläutert wird 310. Dazu greift die Probefahrtapplikation 20 über die Schnittstelle 21 auf ein das Funktionssystem 60 betreffendes Videotutorial 31 des digitalen Benutzerhandbuchs 30 zu und spielt dieses ab 320. Wenn zu dem Funktionssystem 60 kein Videotutorial 31 verfügbar ist, kann sich die Erläuterung 310 auf einen angezeigten oder gesprochenen Text beschränken.

Nach der Vorstellung 300 des Funktionssystems 60 schlägt die Probefahrtapplikation 20 dem Probefahrer vor 400, das vorgestellte Funktionssystem 60 testweise zu aktivieren. Wenn der Probefahrer dem Vorschlag 400 folgt, wird das Funktionssystem 60 aktiviert 500. Der Probefahrer kann den Vorschlag 400 aber ablehnen, so dass ein Aktivieren 500 des Funktionssystems 60 unterbleibt und ein weiteres verbleibendes Funktionssystem 60 vorgestellt wird 300.

Nach Möglichkeit wird jedes Funktionssystem 60 des Fahrzeugs 1 von der Probefahrtapplikation 20, abhängig von einer Fahrsituation des Fahrzeugs 1, vorgestellt 300, vorgeschlagen 400 und testweise aktiviert 500. Dabei werden in erster Linie Funktionssysteme 60 vorgestellt 300, vorgeschlagen 400, und testweise aktiviert 500, welche eine Sonderausstattung des Fahrzeugs 1 bilden.

Nach der testweisen Aktivierung 500 des Funktionssystems 60 fragt die Probefahrtapplikation 20 eine Rückmeldung 70 des Probefahrers betreffend das testweise aktivierte Funktionssystem 60 ab 600. Eine Rückmeldung 70 des Probefahrers kann ein Interesse an dem Funktionssystem 60, eine Indifferenz bzgl. des Funktionssystems 60 oder ein Desinteresse an dem Funktionssystem 60 umfassen. Es versteht sich, dass ein Interagieren des Probefahrers mit der Multimediavorrichtung 10 auf sämtliche bekannten oder künftigen Arten und Weisen erfolgen kann.

Weiterhin während der Probefahrt wird die abgefragte Rückmeldung 70 des Probefahrers mittels der Vorrichtung 40 des Fahrzeugs 1 zur drahtlosen Kommunikation drahtlos an das Backendsystem 90 übermittelt 700, so dass der Fahrzeughändler bereits vor dem Abschluss der Probefahrt Kenntnis von den Rückmeldung 70 des Probefahrers erhält. Anschließend werden die vorstehenden Schritte 300, 400, 500, 600, 700 wiederholt, solange weitere Funktionssysteme 60 des Fahrzeugs verbleiben und die Probefahrt andauert.

Nach der Rückkehr des Probefahrers wird die Probefahrtapplikation 30 von dem Fahrzeughändler beendet 800.

Ein Vorteil der erfindungsgemäßen Multimediaeinrichtung besteht darin, dass der Probefahrer zu jedem Funktionssystem gesicherte Informationen aus erster Hand erhält und die Wirkung des Funktionssystems informiert erfahren kann. Als weiterer Vorteil kann angesehen werden, dass der Probefahrer während der Probefahrt jedes in dem Fahrzeug verbaute Funktionssystem kennenlernt und somit eine fundierte Entscheidung auch über den Erwerb einer ein bestimmtes Funktionssystem umfassenden Sonderausstattung sicher treffen kann. Abgesehen davon kann mittels der Probefahrtapplikation ein Kontakt zu dem Probefahrer - und möglichen späteren Kunden - intensiviert und positiv gestaltet werden. Auch der Fahrzeughändler profitiert von der Probefahrtapplikation, indem er sicher ist, dass der Probefahrer während der Probefahrt alle für eine Kaufentscheidung relevanten Informationen aus erster Hand erhält und persönliche Erfahrungen macht, wodurch ein besseres Verkaufsgespräch nach der Probefahrt ermöglicht wird.

### BEZUGSZEICHENLISTE:

- 1: Fahrzeug
- 10: Multimediavorrichtung
- 20: Probefahrtapplikation
- 21: Schnittstelle
- 30: digitales Benutzerhandbuch
- 31: Videotutorial
- 40: Vorrichtung zur drahtlosen Kommunikation
- 50: Steuergerät
- 60: Funktionssystem
- 70: Rückmeldung
- 80: Bussystem
- 90: Backendsystem
- 100: Starten
- 200: Begrüßen
- 300: Vorstellen
- 310: Erläutern
- 320: Abspielen
- 400: Vorschlagen
- 500: Aktivieren
- 600: Abfragen
- 700: Übermitteln
- 800: Beenden

## Patentansprüche

1. Multimediavorrichtung (10) für ein Fahrzeug (1) mit einer während einer Probefahrt des Fahrzeugs (1) ausführbaren Probefahrtapplikation (20), welche konfiguriert ist, während der Probefahrt des Fahrzeugs (1) mit einem Probefahrer zu interagieren und mindestens ein Funktionssystem (60) des Fahrzeugs (1) testweise zu aktivieren (500) und zu jedem testweise aktivierten Funktionssystem (60) eine Rückmeldung (70) des Probefahrers abzufragen (600).

2. Multimediavorrichtung nach Anspruch 1, bei der die Probefahrtapplikation (20) konfiguriert ist, mittels einer Vorrichtung (40) des Fahrzeugs (1) zur drahtlosen Kommunikation die abgefragte Rückmeldung (70) des Probefahrers an ein Backendsystem (90) zu übermitteln (700).

3. Multimediavorrichtung nach einem der Ansprüche 1 oder 2, bei der die Probefahrtapplikation (20) konfiguriert ist, ausschließlich von einem Fahrzeughändler gestartet zu werden (100).

4. Multimediavorrichtung nach einem der Ansprüche 1 bis 3, mit einem insbesondere mindestens ein Videotutorial (31) umfassenden digitalen Benutzerhandbuch (30), bei der die Probefahrtapplikation (20) eine Schnittstelle (21) zu dem digitalen Benutzerhandbuch (30) aufweist und insbesondere konfiguriert ist, das mindestens eine Videotutorial (31) abzuspielen (320).

5. Verfahren zum Interagieren mit einem Probefahrer während einer Probefahrt eines Fahrzeugs (1), bei dem von einer Multimediavorrichtung (10) des Fahrzeugs (1), insbesondere einer Multimediavorrichtung (10) nach einem der Ansprüche 1 bis 4 mit einer Probefahrtapplikation (20), die folgenden Schritte ausgeführt werden:
- Begrüßen (200) des Probefahrers,
- Vorstellen (300) mindestens eines Funktionssystems (60) des Fahrzeugs (1),
- Vorschlagen (400) einer testweisen Aktivierung des Funktionssystems (60),
- Aktivieren (500) des Funktionssystems (60),
- Abfragen (600) einer Rückmeldung (70) des Probefahrers betreffend das testweise aktivierte Funktionssystem (60).

6. Verfahren nach Anspruch 5, bei dem die abgefragte Rückmeldung (70) des Probefahrers mittels einer Vorrichtung (40) des Fahrzeugs (1) zur drahtlosen Kommunikation an ein Backendsystem (90) übermittelt wird (700).

7. Verfahren nach einem der Ansprüche 5 oder 6, bei dem während des Vorstellens (300) eine Bedienungsweise und/oder eine Funktionsweise des Funktionssystems (60) erläutert wird (310), insbesondere durch Abspielen (320) eines Videotutorials (31) eines digitalen Benutzerhandbuchs (30).

8. Verfahren nach einem der Ansprüche 5 bis 7, bei dem ein Funktionssystem (60) einer Sonderausstattung vorgestellt (300), vorgeschlagen (400), und/oder testweise aktiviert wird (500).

9. Verfahren nach einem der Ansprüche 5 bis 8, bei dem das Funktionssystem (60) abhängig von einer Fahrsituation des Fahrzeugs (1) vorgestellt (300), vorgeschlagen (400) und/oder testweise aktiviert wird (500).

10. Verfahren nach einem der Ansprüche 5 bis 9, bei dem die Probefahrtapplikation (10) vor dem Start der Probefahrt von einem Fahrzeughändler gestartet wird (100).

## Claims

1. Multimedia device (10) for a vehicle (1) with a test drive application (20) which can be executed during a test drive of the vehicle (1), which test drive application is configured to interact with a test driver during the test drive of the vehicle (1) and to activate (500) as a test at least one function system (60) of the vehicle (1) and for each function system (60) activated as a test to request (600) a feedback (70) from the test driver.

2. Multimedia device according to claim 1, in which the test drive application (20) is configured to transmit (700) the requested feedback (70) from the test driver to a backend system (90) by means of a device (40) of the vehicle (1) for wireless communication.

3. Multimedia device according to any of claims 1 or 2, in which the test drive application (20) is configured to be started (100) exclusively by a vehicle dealer.

4. Multimedia device according to any of claims 1 to 3, having a digital user handbook (30) including in particular at least one video tutorial (31), in which the test drive application (20) has an interface (21) to the digital user handbook (30) and is in particular configured to play back (320) the at least one video tutorial (31).

5. Method for interacting with a test driver during a test drive of the vehicle (1) in which the following steps are carried out by a multimedia device (10) of the vehicle (1), in particular a multimedia device (10) according to any of claims 1 to 4 having a test drive application (20):
- greeting (200) the test driver,
- introducing (300) at least one function system (60) of the vehicle (1),
- suggesting (400) an activation of the function system (60) as a test,
- activating (500) the function system (60),
- requesting (600) a feedback (70) from the test driver concerning the function system (60) activated as a test.

6. Method according to claim 5, in which the requested feedback (70) of the test driver is transmitted (700) to a backend system (90) by means of a device (40) of the vehicle (1) for wireless communication.

7. Method according to any of claims 5 or 6, in which during the introduction (300) a mode of operation and/or a functionality of the function system (60) is explained (310), particularly by playing back (320) a video tutorial (31) of a digital user handbook (30).

8. Method according to any of claims 5 to 7, in which a function system (60) of an optional feature is introduced (300), proposed (400), and/or activated (500) as a test.

9. Method according to any of claims 5 to 8, in which the function system (60) is introduced (300), proposed (400) and/or activated (500) as a test depending on a drive situation of the vehicle (1).

10. Method according to any of claims 5 to 9, in which the test drive application (10) is started (100) via a vehicle dealer prior to the start of the test drive.

## Revendications

1. Dispositif multimédia (10) pour un véhicule (1) avec une application d'essai de bon fonctionnement (20) réalisable pendant un essai de bon fonctionnement du véhicule (1), qui est configurée afin d'interagir pendant l'essai de bon fonctionnement du véhicule (1) avec un conducteur-test et d'activer à des fins d'essai au moins un système fonctionnel (60) du véhicule (1) et de demander (600) pour chaque système fonctionnel (60) activé à des fins d'essai un retour d'information (70) du conducteur-test.

2. Dispositif multimédia selon la revendication 1, pour lequel l'application d'essai de bon fonctionnement (20) est configurée afin de transmettre (700) au moyen d'un dispositif (40) du véhicule (1) pour la communication sans fil le retour d'information (70) demandé du conducteur-test à un système back-end (90).

3. Dispositif multimédia selon l'une des revendications 1 ou 2, pour lequel l'application d'essai de bon fonctionnement (20) est configurée afin d'être démarrée exclusivement par un concessionnaire automobile (100).

4. Dispositif multimédia selon l'une des revendications 1 à 3, avec un manuel utilisateur (30) numérique comprenant en particulier au moins un tutoriel vidéo (31), pour lequel l'application d'essai de bon fonctionnement (20) présente une interface (21) au manuel utilisateur (30) numérique et est configurée en particulier afin de jouer (320) l'au moins un tutoriel vidéo (31).

5. Procédé pour l'interaction avec un conducteur-test pendant un essai de bon fonctionnement d'un véhicule (1), pour lequel par un dispositif multimédia (10) du véhicule (1), en particulier un dispositif multimédia (10) selon l'une des revendications 1 à 4 avec une application d'essai de bon fonctionnement (20) les étapes suivantes sont réalisées :
- l'accueil (200) du conducteur-test,
- la présentation (300) au moins d'un système fonctionnel (60) du véhicule (1),
- la proposition (400) d'une activation à des fins d'essai du système fonctionnel (60),
- l'activation (500) du système fonctionnel (60),
- la demande (600) d'un retour d'information (70) du conducteur-test concernant le système fonctionnel (60) activé à des fins d'essai.

6. Procédé selon la revendication 5, pour lequel le retour d'information (70) demandé du conducteur-test est transmis (700) au moyen d'un dispositif (40) du véhicule (1) pour la communication sans fil à un système back-end (90).

7. Procédé selon l'une des revendications 5 ou 6, pour lequel pendant la présentation (300) un maniement et/ou un fonctionnement du système fonctionnel (60) est expliqué (310), en particulier par jeu (320) d'un tutoriel vidéo (31) d'un manuel utilisateur (30) numérique.

8. Procédé selon l'une des revendications 5 à 7, pour lequel un système fonctionnel (60) d'un équipement spécial est présenté (300), proposé (400) et/ou activé à des fins d'essai (500).

9. Procédé selon l'une des revendications 5 à 8, pour lequel le système fonctionnel (60) est présenté (300), proposé (400) et/ou activé (500) à des fins d'essai en fonction d'une situation de marche du véhicule (1).

10. Procédé selon l'une des revendications 5 à 9, pour lequel l'application d'essai de bon fonctionnement (10) est démarrée avant le démarrage de l'essai de bon fonctionnement par un concessionnaire automobile (100).
